# EUROPEAN PATENT SPECIFICATION

(11) **EP 1 815 817 B1**
(45) Date of publication and mention of the grant of the patent: **15.04.2009**
(21) Application number: 07101612.5
(22) Date of filing: 02.02.2007
(51) Int. Cl.: A61C 1/00, A61C 19/04, A61G 15/10

(54) **A dental unit**
Dentaleinheit
Unité dentaire

(30) Priority: 03.02.2006 IT BO20060063
(43) Date of publication of application: 08.08.2007
(73) Proprietor: CASTELLINI S.p.A., 40013 Castel Maggiore (Bologna) (IT)
(72) Inventor: Castellini, Franco, 40124, BOLOGNA (IT)
(74) Representative: Lanzoni, Luciano

(56) References cited:
- US-A1- 2004 059 197
- US-B1- 6 547 565
- US-B1- 6 591 698

## Description

The present invention relates to a dental unit, in particular a dental unit equipped with means for displaying the operating parameters.

At present, a dental unit in its most basic form typically consists of a chair, a supporting member which mounts the main and auxiliary items of dental equipment, a tray for a main set of handpieces and, if necessary, another tray for an accessory set of handpieces.

The dental unit is normally equipped with a plurality of dental handpieces, divided substantially into instruments, for example, a turbine and a micromotor, used for dental operations of traditional conservative type, and instruments, for example, a syringe and a polymerising lamp, used for complementary stages of dental treatment (e.g. US 2004/0059197).

These handpieces may be located, depending on function, either on the main tray or on the accessory tray.

Over time, this basic structure has been constantly improved in both the internal and external features of the dental unit. Thus, the latest dental units include increasingly complex water and compressed air systems, one or more computerized control units designed to control the functions of the dental unit, and other technological developments.

These continual improvements, combined with the possibility of using computerized control units, have made it possible to improve the handpieces and other working parts of the dental unit in order to optimise the unit, making it as complete and versatile as possible.

One of these improvements consisted in fitting the dental unit with a brushless micromotor used for traditional, conservative type treatments, as well as for implants or endodontic operations.

This diversification has been made possible thanks also to the precise control of the speed and torque of the brushless micromotor according to programmed parameters within precise ranges that depend on the type of operation or treatment the dental unit is used for.

This has made it possible to enhance the built-in features of the dental unit itself to extend the capabilities of the unit to include new functions.

In particular, one of the needs which current dental units are required to satisfy is that of monitoring the actual "work" done by the handpieces during use, so that the dental surgeon can, in particular, make a prompt decision as to the treatment to apply next or the implant to use on the patient

As described in industrial invention patent application BO2005A000438 (EP 1 738 711 A) in the name of the same Applicant as this invention, dental units that allow handpiece work data to be displayed in real time can be produced.

The dental unit disclosed in that application comprises a data display screen connected to the computerized control unit through an interface unit.

The interface unit receives from the computerized control unit an input signal that is a function of the handpiece working torque value which is interpolated and displayed on the screen as a graph of torque over time.

This solution is not, however, free of disadvantages.

The information relating to the working torque, although displayed in real time, cannot be used immediately by the dental surgeon and must be further processed to provide details regarding, for example, the tool that should be used to continue the treatment in progress.

In this context, the main technical purpose of the present invention is to propose a dental unit that is free of the above mentioned disadvantages.

The invention therefore has for an aim to provide a dental unit capable of giving the surgeon ready information useful for the work being done on the patient, thus simplifying and speeding up the dental surgeon's work.

The technical characteristics of the invention, with reference to the above aims, are clearly described in the claims below and its advantages are apparent from the detailed description which follows, with reference to the accompanying drawings which illustrate a preferred embodiment of the invention provided merely by way of example without restricting the scope of the invention as claimed, and in which:
- Figure 1 shows a dental unit according to the present invention in a schematic side view with some parts cut away to better illustrate others;
- Figure 2 is a diagram illustrating some of the parts of the dental unit of Figure 1.

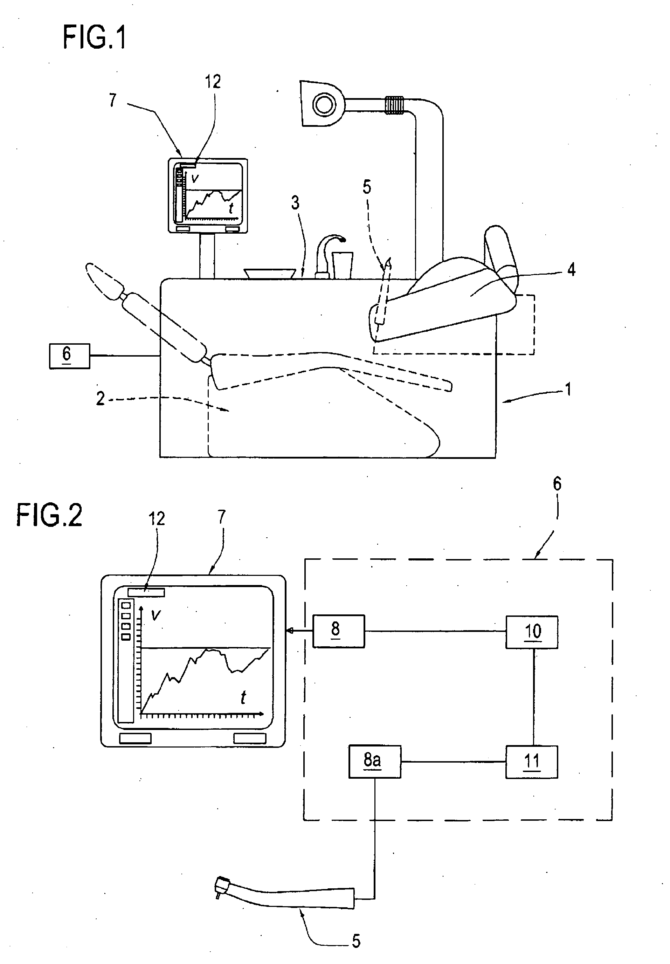

With reference to the accompanying drawings, in particular Figure 1, the numeral 1 denotes a dental unit according to this invention.

The dental unit 1 essentially comprises, insofar as is relevant to the present invention: a chair 2; a base 3 located next to the chair 2 and mounting various items of equipment illustrated only in part simply to allow an understanding of the text, since they are of well-known type; a plurality of handpieces 5 located on a handpiece tray 4; a computerized control unit for controlling and driving the dental unit and schematically represented as a block 6; viewing means 7 for displaying data relating to functional parameters of the handpiece being used and coming from the handpiece in substantially known manner.

As illustrated in Figure 2, the computerized control unit 6 comprises an interface 8 for transmitting the data to the viewing means 7.

The computerized unit 6 comprises means 8a for interpolating the data in order to provide additional information relating to the operation of the handpiece 5.

Preferably, the data transmitted and interpolated comprise the rotation speed of the handpiece 5, the torque generated by the handpiece 5 and the length of time the handpiece 5 is used for during a given operation.

Preferably, the operation considered is one in which a pilot bur is used to prepare a patient's bone for subsequent operations.

The interpolating means 8a are designed to calculate an estimate of the work done by the handpiece 5, based in particular on the rotation speed and torque of the handpiece 5 and on the length of time it has been used for.

The dental unit 1 also comprises, preferably in the computerized control unit 6, corrective means 11 for weighting the interpolated data according to the specific user of the handpiece.

That is because the work actually done by the handpiece 5 is affected by the pressure applied by the surgeon and is not only a function of the physical quantities measured.

Thus, in calculating the work done by the handpiece 5, the corrective means 11 introduce a corrective index as a function of the pressure applied by the surgeon using the handpiece 5 on the patient.

The dental unit 1 comprises comparator means 10 for estimating an item of information 12 relating to the patient treated.

The comparator means 10 compare the work done by the handpiece 5 with a scale of reference values relating, in particular, to the drilling of certain materials.

In this way, the comparator means 10 can provide an indication of the hardness of the bone being treated as a function of the work done to cut it.

Preferably, this indication is expressed as a percentage of the maximum hardness sampled experimentally.

Preferably, the viewing means 7, consisting for example of a screen, have a portion 12 used in particular for displaying the estimated indication. More specifically, the portion 12 of the viewing means 7 is used to display the hardness, expressed preferably as a percentage, of the patient's bone (in practice, virtually in real time on the screen itself).

It will be appreciated that a dental unit made in this way achieves the aforementioned aims by providing an immediate indication of the hardness of the patient's bone as soon as the surgeon completes a preliminary operation on the bone, thereby facilitating subsequent work.

During the operation, a trace of work over time is provided and, upon completion of work with the pilot bur, using the indication of bone hardness, the surgeon is in a better position to choose the most suitable bur with which to continue working or how many burs should be used to proceed.

It will be understood that the invention described may be useful in many industrial applications and may be modified and adapted in several ways without thereby departing from the scope of the claims.

## Claims

1. A dental unit comprising:
- a chair (2);
- a base (3) positioned next to the chair and mounting various items of equipment;
- a plurality of handpieces (5) located on a handpiece tray (4);
- a computerized control unit (6) for controlling and driving the dental unit;
- viewing means (7) for displaying data relating to functional parameters of the handpiece (5) being used, said viewing means (7) being connected to the computerized control unit (6) through an interface (8) for transmitting and conditioning a signal that carries said data;
- means (8a) for interpolating the data being provided, in particular for obtaining the data in a displayable form, the dental unit (1) being **characterised in that** it further comprises means (10) for comparing the data in order to provide an estimated information item (12) relating to the patient being treated, said interpolating means (8a) being designed to calculate an estimate of the work done by the handpiece (5), and said dental unit further comprises corrective means (II) for weighting said estimate work by introducing a corrective index as a function of the pressure applied by the surgeon using the handpiece (5) on the patient.

2. The dental unit according to claim 1, **characterised in that** the information item (12) relates to the hardness of the bone of the patient being treated with the handpiece (5).

3. The dental unit according to claim 2**, characterised in that** the hardness (12) is expressed as a percentage of a maximum value.

4. The dental unit according to claim 1, **characterised in that** the comparator means (10) are designed to compare the information item (12) with a plurality of sampled reference values.

5. The dental unit according to claim 1, **characterised in that** the viewing means (7) comprise a portion used to display the information item (12) substantially in real time.

6. The dental unit according to claim 1, **characterised in that** the data used to estimate the information item (12) comprise at least the rotation speed of the handpiece (5), the torque generated by the handpiece (5) and the length of time the handpiece (5) is used for.

## Patentansprüche

1. Dentaleinheit bestehend aus:
- einem Patientenstuhl (2);
- einem Sockel (3), der neben dem Patientenstuhl angeordnet ist und verschiedene Ausrüstungsteile trägt;
- mehreren Handstücken (5), die an einer Handstückablage (4) angeordnet sind;
- einer computergestützten Steuereinheit (6) für die Steuerung und den Antrieb der Dentaleinheit;
- Anzeigemitteln (7) zur Anzeige von Daten, die auf Funktionsparameter des verwendeten Handstücks (5) bezogen sind, wobei die Anzeigemittel (7) über eine Schnittstelle (8) zur Übertragung und Aufbereitung eines Signals, das die genannten Daten trägt, mit der computergestützten Steuereinheit (6) verbunden sind;
- Mitteln (8a) zum Interpolieren der bereitgestellten Daten, insbesondere um die Daten in anzeigbarer Form zu erhalten, wobei die Dentaleinheit (1) **dadurch gekennzeichnet ist, dass** sie ferner Mittel (10) zum Vergleichen der Daten beinhaltet, um eine auf den behandelten Patienten bezogene geschätzte Informationseinheit (12) bereitzustellen; wobei die Interpolationsmittel (8a) dafür ausgelegt sind, eine Schätzung der von dem Handstück (5) geleisteten Arbeit zu berechnen, und worin die Dentaleinheit ferner Korrekturmittel (11) beinhaltet, die zur Gewichtung der geschätzten Arbeit durch Einführung eines Korrekturindexes dienen, der eine Funktion des vom Zahnarzt beim Einsatz des Handstückes (5) zur Behandlung des Patienten ausgeübten Drucks ist.

2. Dentaleinheit nach Anspruch 1, **dadurch gekennzeichnet, dass** die Informationseinheit (12) auf die Härte des Knochens des mit dem Handstück (5) behandelten Patienten bezogen ist.

3. Dentaleinheit nach Anspruch 2, **dadurch gekennzeichnet, dass** die Härte (12) als Prozentanteil eines Höchstwertes ausgedrückt wird.

4. Dentaleinheit nach Anspruch 1, **dadurch gekennzeichnet, dass** die Komparatormittel (10) dafür ausgelegt sind, die Informationseinheit (12) mit mehreren in Proben erfassten Referenzwerten zu vergleichen.

5. Dentaleinheit nach Anspruch 1, **dadurch gekennzeichnet, dass** die Anzeigemittel (7) einen Abschnitt beinhalten, der zur Anzeige der Informationseinheit (12) im Wesentlichen in Echtzeit dient.

6. Dentaleinheit nach Anspruch 1, **dadurch gekennzeichnet, dass** die zur Bewertung der Informationseinheit (12) verwendeten Daten zumindest die Drehzahl des Handstücks (5), das vom Handstück (5) erzeugte Drehmoment und die Nutzungsdauer des Handstücks (5) beinhalten.

## Revendications

1. Une unité dentaire comprenant :
- un fauteuil (2) ;
- un bloc (3) positionné à côté du fauteuil et supportant divers éléments d'instrumentation ;
- une pluralité de pièces à main (5) situées sur une tablette (4) pour pièces à main ;
- une unité de commande informatisée (6) pour le contrôle et le pilotage de l'unité dentaire ;
- des moyens de visualisation (7) pour l'affichage de données relatives à des paramètres fonctionnels de la pièce à main (5) en cours d'utilisation, lesdits moyens de visualisation (7) étant reliés à l'unité de commande informatisée (6) par l'intermédiaire d'une interface (8) servant à transmettre et à conditionner un signal qui porte lesdites données ;
- des moyens (8a) pour l'interpolation des données étant prévus, en particulier pour obtenir les données sous une forme visualisable, l'unité dentaire (1) étant **caractérisée en ce qu'**elle comprend en outre des moyens (10) de comparaison des données afin de fournir un élément d'information estimé (12) relatif au patient traité ; lesdits moyens d'interpolation (8a) étant destinés à calculer une estimation du travail effectué par la pièce à main (5), et ladite unité dentaire comprend en outre des moyens de correction (11) destinés à pondérer ledit travail estimé en introduisant un indice de correction qui est fonction de la pression exercée sur le patient par le chirurgien qui utilise la pièce à main (5).

2. L'unité dentaire selon la revendication 1, **caractérisée en ce que** l'élément d'information (12) concerne la dureté de l'os du patient traité avec la pièce à main (5).

3. L'unité dentaire selon la revendication 2, **caractérisée en ce que** la dureté (12) est exprimée comme un pourcentage d'une valeur maximum.

4. L'unité dentaire selon la revendication 1, **caractérisée en ce que** les moyens comparateurs (10) sont destinés à comparer l'élément d'information (12) avec une pluralité de valeurs de référence échantillonnées.

5. L'unité dentaire selon la revendication 1, **caractérisée en ce que** les moyens de visualisation (7) comprennent une partie utilisée pour afficher l'élément d'information (12) essentiellement en temps réel.

6. L'unité dentaire selon la revendication 1, **caractérisée en ce que** les données utilisées pour estimer l'élément d'information (12) comprennent au moins la vitesse de rotation de la pièce à main (5), le couple généré par la pièce à main (5) et le temps d'utilisation de cette même pièce à main (5).
